# EUROPÄISCHE PATENTANMELDUNG

(11) **EP 1 738 648 A2**
(43) Veröffentlichungstag der Anmeldung: **03.01.2007**
(21) Anmeldenummer: 06116222.8
(22) Anmeldetag: 28.06.2006
(51) Int. Cl.: A21B 1/42

(54) **Backofen mit mehreren Stufen**

(30) Priorität: 29.06.2005 DE 102005030791
(71) Anmelder: Werner & Pfleiderer Lebensmitteltechnik Sachsen GmbH, 02689 Sohland (DE); Pascal Maschinentechnik GmbH, 02625 Bautzen (DE)
(72) Erfinder: Paulick, Lothar, 02625, Bautzen (DE); Jeremias, Frank, 02625, Bautzen (DE)
(74) Vertreter: Bittner, Bernhard

(57) **Zusammenfassung**

Die Erfindung betrifft einen Backofen mit einem durch eine Vielzahl von Begrenzungswänden im Wesentlichen geschlossenen Backraum (10), in dem das Backgut (12) gebacken wird, wobei in wenigstens einer Begrenzungswand (2, 3, 4) eine Einbringöffnung (6) zum stückweisen Einbringen des Backguts (12) angeordnet ist, mit wenigstens einer im Backraum angeordneten Ablageeinrichtung (11a, 11b, 11c, 11d), auf der das Backgut (12) wenigstens zeitweise abgelegt wird, wobei wenigstens eine erste Verschiebeeinrichtung (13a, 13b, 14a) vorgesehen ist, die sich bezüglich der Ablageeinrichtung (11a, 11b, 11c, 11d) bewegt und die das Backgut (12) gegenüber der Ablageeinrichtung (11a, 11b, 11c, 11d) verschiebt.

## Beschreibung

Die vorliegende Erfindung bezieht sich auf einen Backofen zum Backen von Backgut. Derartige Öfen werden unter anderem in Großbäckereien, neuerdings jedoch auch in Filialen von Lebensmittelketten eingesetzt. Dabei sind aus dem Stand der Technik solche Backöfen bekannt, in denen das Backgut in großer Zahl gemeinsam durch eine Tür eingebracht wird und nach Erreichen der Backzeit durch diese Türe oder auch durch eine weitere Türe wieder entnommen wird.

Insbesondere für Backwaren wie Brötchen, Brezen, Semmeln und dergleichen ist es jedoch auch aus dem Stand der Technik bekannt, halbfertige Ware, im Folgenden auch als Teigling bezeichnet, in einen Ofen zu verbringen, um die Ware anschließend fertig zu backen.

Werden jedoch jeweils größere Anzahlen an Teiglingen gleichzeitig in den Ofen eingebracht, so werden diese nach einer bestimmten Backzeit auch im wesentlichen gleichzeitig fertig gebacken, können aber im üblichen Geschäftsbetrieb nicht gleichzeitig verkauft werden. Daneben sind derartige Lebensmittelketten oft mit einer relativ geringen Anzahl an Personal ausgestattet und nach Erreichen der Backzeit steht nicht genügend Personal zur Verfügung, um die fertig gebackene Ware sofort dem Ofen zu entnehmen.

Der vorliegenden Erfindung liegt daher die Aufgabe zugrunde, einen Backofen zu schaffen, der ein kontinuierliches Backen von Backgut erlaubt. Daneben soll der erfindungsgemäße Ofen eine Personalentlastung ermöglichen.

Dies wird erfindungsgemäß durch einen Backofen nach Anspruch 1 und ein Verfahren nach Anspruch 16 erreicht. Vorteilhafte Ausführungsformen und Weiterbildungen sind Gegenstand der Unteransprüche.

Der erfindungsgemäße Backofen weist einen durch eine Vielzahl von Begrenzungswänden im Wesentlichen geschlossenen Backraum auf, in dem das Backgut gebacken wird. Dabei ist in wenigstens einer Begrenzungswand eine Einbringöffnung vorgesehen, um das Backgut stückweise in den Backraum einzubringen. In dem Backraum ist wenigstens eine Ablageeinrichtung vorgesehen, auf der das Backgut wenigstens zeitweise abgelegt wird. Erfindungsgemäß ist wenigstens eine erste Verschiebeeinrichtung vorgesehen, die sich bezüglich der Ablageeinrichtung bewegt und die das Backgut gegenüber der Ablageeinrichtung verschiebt.

Unter einer Begrenzungswand werden alle diejenigen Wände verstanden, die den Backraum begrenzen, also insbesondere die seitlichen Begrenzungswände, die hintere Begrenzungswand, die vordere Begrenzungswand, die untere und die obere Begrenzungswand. Damit weist der Backraum eine in Wesentlichen quaderförmige Gestalt auf.

Unter Backgut wird jede Art von zu backender Ware wie Brötchen, Brezen, Semmeln und dergleichen verstanden. Insbesondere wird unter Backgut auch halbfertige Ware wie Teiglinge verstanden, die auch in teilweise gefrorenem Zustand vorliegen können.

Unter einem stückweisen Einbringen des Backguts wird verstanden, dass nicht eine große Anzahl von Backgut gleichzeitig auf ein Backblech oder dergleichen gelegt und danach in den Ofen gebracht wird, sondern dass das Backgut im Wesentlichen einzeln, das heißt Stück für Stück, oder in geringer Stückzahl in den Backraum eingebracht wird.

Unter einer Ablageeinrichtung wird jede Einrichtung verstanden, auf der das Backgut abgelegt werden kann, wie beispielsweise Backbleche und dergleichen. Bevorzugt ist die Ablageeinrichtung in einem vorgegebenen Abstand von der unteren und oberen Begrenzungswand des Backofens beabstandet.

Die Verschiebeeinrichtung bewegt sich bezüglich der Ablageeinrichtung. Dies kann dadurch erreicht werden, dass die Ablageeinrichtung im Wesentlichen ortsfest angeordnet ist und sich die Verschiebeeinrichtung gegenüber dieser Ablageeinrichtung bewegt. Umgekehrt kann jedoch auch die Verschiebeeinrichtung ortsfest angeordnet sein und sich die Ablageeinrichtung gegenüber der Verschiebeeinrichtung bewegen. Auch ist es möglich, weder die Ablageeinrichtung noch die Verschiebeeinrichtung ortsfest anzuordnen.

Durch diese Verschiebebewegung wird das Backgut gegenüber der Ablageeinrichtung verschoben.

Unter einer Einbringöffnung wird eine solche Öffnung verstanden, deren Querschnitt wesentlich geringer ist als die Fläche derjenigen Begrenzungswand, in der die Einbringöffnung vorgesehen ist.

Bevorzugt ist die Einbringöffnung in der oberen Begrenzungswand des Backofens vorgesehen. Durch diese Einbringöffnung hindurch wird das Backgut in den Backraum eingebracht. In einer weiteren Ausführungsform wäre es auch möglich, die Einbringöffnung an einer der seitlichen Begrenzungswände vorzusehen und über eine Rutscheneinrichtung auf die Ablageeinrichtung zu verbringen. Auch wäre es möglich, mehrere Einbringöffnungen vorzusehen, durch welche hindurch Backgut in den Backraum eingebracht werden kann. Bevorzugt weist die Einbringöffnung einen Querschnitt auf, der größer ist als der Querschnitt des einzubringenden Backguts. Durch diese Wahl der Größenverhältnisse wird erreicht, dass das Backgut in den Backraum eingebracht werden kann, ohne dass es dabei gestaucht oder verformt werden muss.

Bevorzugt ist an der Einbringöffnung ein Schließmechanismus angeordnet, der bewirkt, dass die Einbringöffnung im Wesentlichen nur während des Einbringens des Backguts geöffnet ist. Durch diesen Schließmechanismus wird erreicht, dass die Öffnung normalerweise, das heißt, wenn gerade kein Backgut eingebracht wird, geschlossen ist, und auf diese Weise verhindert wird, dass warme Luft aus dem Ofen austreten kann. Auf diese Weise kann die Temperaturstabilität im Inneren des Backofens verbessert werden.

Bei einer weiteren bevorzugten Ausführungsform weist der Schließmechanismus eine Klappeneinrichtung auf, die sich unter dem Gewicht des Backguts öffnet. Dies bedeutet, dass das Backgut zunächst auf den Schließmechanismus, beziehungsweise eine Federklappe, fällt, und diese federgestützte Klappe sich unter dem Gewicht des Backguts öffnet und das Backgut nach innen fallen kann. Es ist jedoch auch möglich, den Schließmechanismus mit einer Motorsteuerung zu versehen, die bewirkt, dass der Schließmechanismus in regelmäßigen Abständen geöffnet wird und jeweils das Durchtreten eines einzelnen Stücks oder einer bestimmten Anzahl des Backgutes erlaubt.

Bevorzugt ist an der Einbringöffnung eine Erfassungseinrichtung vorgesehen, die das stückweise Einbringen des Backguts erfasst. Auf diese Weise kann beispielsweise gezählt werden, wie viele Brötchen pro Zeiteinheit in den Backraum gelangen. Auch kann die Anzahl der in den Backraum gelangenden Brötchen auf diese Weise kontrolliert werden. Bevorzugt weist die Erfassungseinrichtung eine Lichtschrankeneinheit auf, die jeweils den Durchtritt eines Stücks Backgut durch die Einbringöffnung erfasst beziehungsweise registriert. Anstelle einer Lichtschrankeneinheit können jedoch auch mechanische Sensorelemente, beispielsweise an dem Schließmechanismus, vorgesehen sein, die jeweils das Durchtreten von Backgut registrieren.

Bei einer weiteren bevorzugten Ausführungsform weist wenigstens eine Ablageeinrichtung eine Durchtrittsöffnung auf, durch die das Backgut stückweise hindurchtreten kann. Auf diese Weise wird erreicht, dass das Backgut zunächst auf die erste Ablageeinrichtung fällt und dann solange gegenüber dieser Ablageeinrichtung verschoben wird, bis es über die Durchtrittsöffnung gelangt und durch diese hindurchfällt. Bei einer weiteren Ausführungsform wird das Backgut über den Rand der Ablageeinrichtung hinausgeschoben. Auch Spalten oder Schlitze werden als Durchtrittsöffnungen aufgefasst.

Bevorzugt ist eine Vielzahl von Ablageeinrichtungen im Wesentlichen zueinander parallel angebracht. Diese Ablageeinrichtungen weisen bevorzugt jeweils Durchtrittsöffnungen auf, durch die das Backgut hindurchfallen kann. Auch die einzelnen Durchtrittsöffnungen weisen bevorzugt Querschnitte auf, die größer sind als der Querschnitt des durchtretenden Backguts.

Durch den Einsatz einer Vielzahl von Ablageeinrichtungen kann erreicht werden, dass das Backgut zunächst gegenüber einer ersten Ablageeinrichtung verschoben wird, bis es durch die Durchtrittsöffnung hindurch tritt, anschließend auf eine zweite Ablageeinrichtung fällt, hierbei wieder gegenüber dieser Ablageeinrichtung verschoben wird und durch eine weitere Durchtrittsöffnung auf eine dritte Ablageeinrichtung fällt und so weiter.

Damit kann durch die Geschwindigkeit der Bewegung der Verschiebeeinrichtung gegenüber der Ablageeinrichtung einerseits und durch die Anzahl der Ablageeinrichtungen andrerseits die Zeitdauer gesteuert werden, während der das Backgut in dem Ofen verbleibt.

Bevorzugt weisen die einzelnen Ablageeinrichtungen zueinander einen Abstand auf, der zwischen 40 mm und 120 mm, bevorzugt zwischen 60 mm und 80 mm und besonders bevorzugt im Bereich von 70 mm liegt. Bei einer weiteren bevorzugten Ausführungsform weist die Ablageeinrichtung einen kreisförmigen Querschnitt auf. Es sind jedoch auch andere Querschnitte, wie insbesondere rechteckige oder polygone Querschnitte und dergleichen denkbar.

Bevorzugt weist die Ablageeinrichtung einen Durchmesser auf, der zwischen 300 mm und 700 mm, bevorzugt zwischen 400 m und 600 mm und besonders bevorzugt im Bereich von 500 mm liegt.

Bevorzugt ist an jeder Ablageeinrichtung eine Vielzahl von Verschiebeeinrichtungen angeordnet. Besonders bevorzugt drehen sich die Verschiebeeinrichtungen jeweils um eine gemeinsame Drehachse. Dadurch wird erreicht, dass das Backgut im Wesentlichen in Umfangrichtung eines Kreises gegenüber der Ablageeinrichtung verschoben wird.

Umgekehrt ist es auch möglich, dass sich wenigstens eine Ablageeinrichtung um eine vorgegebene Drehachse dreht und auf diese Weise das Backgut durch die feststehende Verschiebeeinrichtung gegenüber der Ablageeinrichtung im Wesentlichen entlang einer Kreislinie verschoben wird.

Bei einer weiteren bevorzugten Ausführungsform weist wenigstens eine Ablageeinrichtung, bevorzugt alle Ablageeinrichtungen, ein zentrales Loch auf, durch welches hindurch eine Welle hindurchgeführt werden kann, an der die Verschiebeeinrichtungen angeordnet sind. Anstelle eines Loches in der Mitte kann jedoch auch ein Schlitz vorgesehen sein, der erlaubt, dass die jeweilige Ablageeinrichtung aus dem Ofen entnommen werden kann. Dies ist einerseits zur Reinigungszwecken sinnvoll, andrerseits kann das Backblech auch als herkömmliches Backblech genutzt werden, um eine Vielzahl von Brötchen auf dieses Backblech aufzulegen und dann ohne Verwendung der Verschiebeeinrichtung eine Vielzahl von Brötchen gleichzeitig backen zu können.

Auch können in den erfindungsgemäßen Ofen unterschiedliche Ablageeinrichtungen eingeführt werden, das heißt solche Einrichtungen, die sich entweder selbst drehen, oder denen gegenüber sich die Verschiebeeinrichtung bewegt und gleichzeitig beispielsweise zwischen diesen Ablageeinrichtungen auch konventionelle Backbleche, die jedoch jeweils Schlitze aufweisen, um um die zentrale Welle herum in den Backofen eingeführt werden zu können.

Bei einer weiteren bevorzugten Ausführungsform teilen die Verschiebeeinrichtungen die Ablageeinrichtungen in im Wesentlichen gleich große Sektoren auf. Dies bedeutet, dass die Verschiebeeinrichtungen um einen gemeinsamen Drehpunkt angeordnet sind und jeweils konstante Winkel bezüglich einander aufweisen. So ist es beispielsweise möglich, die Ablageeinrichtungen in sechs Sektoren aufzuteilen, die jeweils einen Mittelpunktswinkel von 60° aufweisen.

Wie oben ausgeführt, bewegt wenigstens eine erste Verschiebeeinrichtung bevorzugt das Backgut in Umfangsrichtung gegenüber der Ablageeinrichtung. Bei einer weiteren bevorzugten Ausführungsform ist auch eine weitere Verschiebeeinrichtung vorgesehen, die das Backgut in im Wesentlichen radialer Richtung bezüglich der gemeinsamen Drehachse der ersten Verschiebeeinrichtungen bewegt. In diesem Falle wird das Backgut nicht durch kreisförmige Bewegungen von einer Ablageeinrichtung auf die nächste verbracht, sondern zumindest durch eine radiale Bewegung.

Bei einer weiteren bevorzugten Ausführungsform sind die ersten Verschiebeeinrichtungen an einer gemeinsamen Welle angeordnet. Diese Welle verläuft, wie oben gesagt, durch eine zentrale Öffnung in den einzelnen Ablageeinrichtungen.

Bevorzugt sind die Bewegungen der einzelnen Verschiebeeinrichtungen miteinander gekoppelt. Es ist jedoch auch möglich, dass die einzelnen Verschiebeeinrichtungen, die an den unterschiedlichen Ablageeinrichtungen angeordnet sind, nicht miteinander gekoppelt sind, sondern die Bewegung jeweils einzeln steuerbar ist.

Bei einer weiteren bevorzugten Ausführungsform weist der Backofen an einer Begrenzungswand, bevorzugt an der unteren Begrenzungswand, eine Ausbringöffnung auf. Bevorzugt handelt es sich auch hierbei um eine Öffnung, deren Querschnitt geringfügig größer ist als der Querschnitt des Backguts. Bevorzugt sind die Durchtrittsöffnung der untersten Ablageeinrichtung und die Austrittsöffnung aufeinander abgestimmt beziehungsweise übereinander angeordnet, das heißt dass Backgut, welches durch die unterste Durchtrittsöffnung fällt, auch gleichzeitig durch die Ausbringöffnung fällt. Die Ausbringöffnung kann, ähnlich wie die Einbringöffnung, mit einem Schließmechanismus ausgestattet sein, der bewirkt, dass die Öffnung sich nur beim Durchtreten von Backgut öffnet.

Es ist jedoch auch möglich, den Backofen an einer der Seitenwände oder der Unterwand mit einer Tür auszustatten, mittels derer das Backgut entnommen werden kann.

Auch kann das Backgut durch die Ausbringöffnung in einen Warmhalteraum fallen oder verbracht werden, in dem die einzelnen Brötchen über eine bestimmte beziehungsweise vorgebbare Zeitspanne warm gehalten werden.

Die Erfindung ist ferner auf eine Backvorrichtung mit einem Backofen der oben beschriebenen Art gerichtet.

Bei einer bevorzugten Ausführungsform weist die Backvorrichtung oberhalb der oberen Begrenzungswand des Backofens eine Einführeinrichtung mit einem sich in Richtung der oberen Begrenzungswand verjüngenden Querschnitt auf, um das Backgut einzuführen. Dies bedeutet, dass oberhalb des eigentlichen Backofens ein trichterartiges Gebilde vorgesehen wird, mit dessen Hilfe das Backgut in den Backofen eingebracht wird. Dieser Trichter kann dabei gewährleisten oder fördern, dass das Backgut stückweise in den Backofen gelangt.

Bei einer weiteren bevorzugten Ausführungsform ist unterhalb der unteren Begrenzungswand des Backofens eine Entnahmeeinrichtung zur Entnahme des Backguts vorgesehen. Bei einer Ausführungsform gelangt das Backgut nach dem Backen in ein Verkaufsregal, aus welchem es direkt vom Bedienpersonal entnommen werden kann.

Die vorliegende Erfindung ist ferner auf ein Verfahren zum Backen von Backgut gerichtet, wobei in einem Schritt das Backgut stückweise in einen Backraum mittels einer Einführöffnung eingebracht wird. In einem weiteren Schritt wird das Backgut auf einer ersten Ablageeinrichtung abgelegt, in einem weiteren Verfahrensschritt wird das Backgut bezüglich der ersten Ablageeinrichtung verschoben und durch eine in der ersten Ablageeinrichtung vorgesehene Durchtrittsöffnung durchgeführt. Bei einem weiteren Verfahrensschritt wird das Backgut durch eine Ausbringöffnung aus dem Backraum ausgebracht.

Alternativ kann das Backgut auch über den Rand der ersten Ablageeinrichtung hinaus verschoben werden.

Bevorzugt erfolgt das Verschieben des Backguts bezüglich der Ablageeinrichtung durch eine Verschiebeeinrichtung, wobei sich diese Verschiebeeinrichtung bezüglich der Ablageeinrichtung bewegt.

Das Ablegen des Backguts auf der ersten Ablageeinrichtung erfolgt dabei erfindungsgemäß selbsttätig, das heißt, das Backgut fällt oder rutscht nach Durchtritt durch die Einbringöffnung auf die Ablageeinrichtung.

Bevorzugt gelangt das Backgut nach dem Durchführen durch die in der ersten Ablageeinrichtung vorgesehene Öffnung auf wenigstens eine weitere Ablageeinrichtung. Dabei fällt das Backgut ebenfalls auf diese weitere Ablageeinrichtung. Da dabei das Backgut bei dem erfindungsgemäßen Verfahren von einer Ablageeinrichtung auf die nächste fällt, sind die Abstände zwischen den einzelnen Ablageeinrichtungen sorgfältig zu wählen. Ferner ändert sich der Backzustand des Backgutes von einer Ablageeinrichtung auf die nächste. Daher werden in einer bevorzugten Ausführungsform die Abstände der einzelnen Ablageeinrichtungen unterschiedlich gewählt, beispielsweise höhere Abstände im oberen Bereich des Backofens und geringere Abstände zwischen den Ablageeinrichtungen im unteren Bereich.

Bevorzugt erfolgt das Verschieben des Backguts mittels einer Verschiebeeinrichtung, die sich gegenüber der ersten Ablageeinrichtung bewegt.

Dabei bewegt sich die Verschiebeeinrichtung im Wesentlichen kontinuierlich gegenüber der Ablageeinrichtung. Es ist jedoch auch möglich, die Bewegung impulsweise durchzuführen und beispielsweise die Bewegung während des Fallens des jeweiligen Brötchens anzuhalten. Bei dieser Ausführungsform wäre es auch möglich, die Bewegung so zu steuern, dass gleichzeitig mehrere Brötchen durch mehrere Durchtrittsöffnungen hindurch fallen. Auch ist es möglich, die Drehbewegung der einzelnen Verschiebeeinrichtungen beziehungsweise Ablageeinrichtungen mit der Erfassungseinrichtung zu synchronisieren, das heißt in dieser Ausführungsform detektiert die Erfassungseinrichtung den Durchtritt eines Stücks Backgut durch die Eintrittsöffnung, gibt ein entsprechendes Signal an einen Motor, der die Bewegung der Ablageeinrichtung beziehungsweise der Verschiebeeinrichtung steuert.

Ferner ist es auch möglich, Erfassungseinrichtungen an der Austrittsöffnung des Backofens vorzusehen. Auf diese Weise ist durch eine Synchronisierung der Erfassungseinrichtungen an der Einbringöffnung und der Erfassungseinrichtung der Austrittsöffnungen ein Zählen der sich momentan im Backraum befindlichen Stück Backgut möglich.

Weitere Vorteile und Ausführungsformen ergeben sich aus den beigefügten Zeichnungen.

Darin zeigen:
- Fig. 1: eine schematische Darstellung eines erfindungsgemäßen Backofens;
- Fig. 2: eine schematische Teildarstellung zweier Ablageeinrichtungen mit Verschiebeeinrichtungen;
- Fig. 3: eine vergrößerte Teildarstellung zweier Ablageeinrichtungen und einer Verschiebeeinrichtung; und
- Fig. 4: eine schematische Darstellung einer erfindungsgemäßen Backvorrichtung.

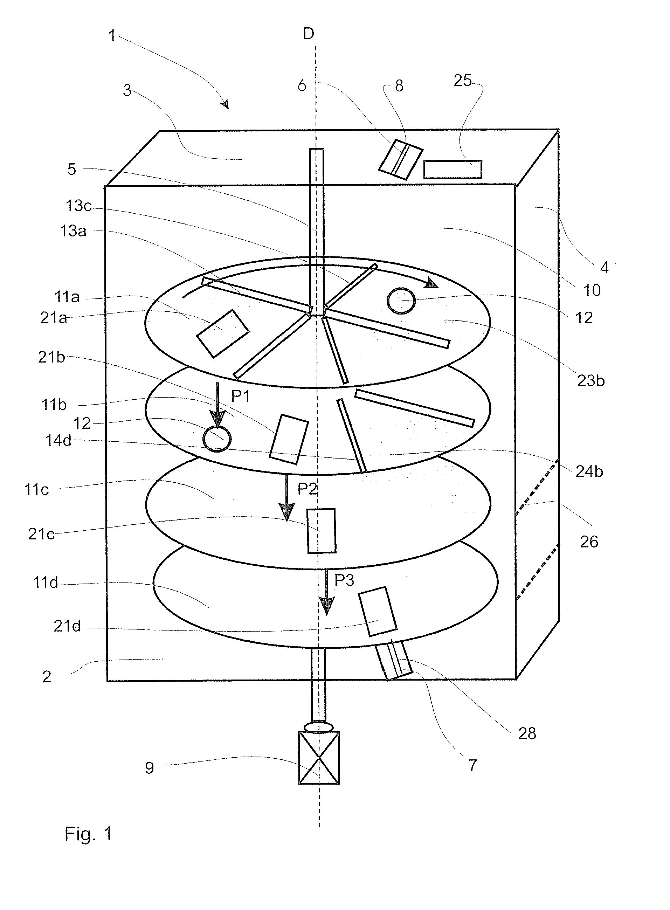

Fig. 1 zeigt schematisch einen erfindungsgemäßen Backofen 1. Dieser weist einen Backraum 10 auf, der von einer oberen Begrenzungswand 3, vier seitlichen Begrenzungswänden, von denen nur die rechte Begrenzungswand 4 sichtbar ist, und einer unteren Begrenzungswand 2 derart umgeben ist, dass der Backraum 10 im Wesentlichen geschlossen ist.

Innerhalb des Backraums 10 ist eine Vielzahl von Ablageeinrichtungen 11a, 11b, 11c und 11d angeordnet. Bei der hier gezeigten Ausführungsform sind vier Ablageeinrichtungen gezeigt. Abweichend hiervon können jedoch auch mehr oder weniger Backbleche vorgesehen sein, beispielsweise zehn Ablageeinrichtungen.

Über eine Einbringöffnung 6 wird das Backgut, wie in diesem Falle Teiglinge 12, in den Backraum 10 eingebracht. An der Einbringöffnung 6 ist ein Schließmechanismus 8 vorgesehen. Dieser Schließmechanismus ist derart ausgestaltet, dass er im Normalfall geschlossen ist und nur, wenn ein Backgut beziehungsweise Brötchen 12 durch diese Öffnung hindurchtritt, kurzzeitig geöffnet wird. Zu diesem Zweck kann der Schließmechanismus 8 (nicht gezeigte) Federn aufweisen, die bewirken, dass der Schließmechanismus normalerweise geschlossen ist, deren Federkraft jedoch unter dem Gewicht des Brötchens überwunden werden kann, wodurch sie sich öffnen.

Das Bezugszeichen 25 bezieht sich auf eine Erfassungseinrichtung, die den Eintritt eines Brötchens 12 durch die Öffnung 6 in den Backraum 10 detektiert. Diese Erfassungseinrichtung 25 kann verwendet werden, um die Anzahl der durch die Öffnung gelangenden Brötchen 12 festzustellen, jedoch auch, um den genauen Zeitpunkt des Durchtritts eines Brötchens in den Backraum festzulegen.

Durch die Öffnung 6 hindurch gelangt das Brötchen auf die erste Ablageeinrichtung 11a. Auf der ersten Ablageeinrichtung 11a sind in Fig. 1 sechs Verschiebeeinrichtungen 13a, 13b, 13c, 13d, 13e und 13f vorgesehen, wobei jedoch die Verschiebeeinrichtung 13b nicht sichtbar ist. Diese Verschiebeeinrichtungen sind an einer Welle 5 um eine Drehachse D angeordnet und bewegen sich bezüglich der Alblageeinrichtung 11a. Auch auf den weiteren Ablageeinrichtungen 11b, 11c und 11d sind entsprechende (nicht gezeigte) Verschiebeeinrichtungen 14 a-d, 15a-d und so weiter vorgesehen.

Die Welle 5 wird in dieser Ausführungsform durch eine außerhalb des Backofens liegende Antriebseinrichtung 9, wie beispielsweise einen Elektromotor, direkt angetrieben. Alternativ wäre es möglich, im Inneren oder Äußeren des Backraums Zahnräder vorzusehen, und den Antrieb über diese Zahnräder zu gestalten. Auch ein Antrieb über Ketten, Gummiräder, Gummibänder und dergleichen ist denkbar.

Die Drehung der Welle 5 und damit der einzelnen Verschiebeeinrichtungen 13 um die Drehachse D erfolgt bei dieser Ausführungsform getaktet. Sobald die Erfassungseinrichtung 8 den Durchtritt eines Brötchens detektiert, wird die Welle 5 in diesem Falle um 60° weitergedreht, sodass der Sektor 23b, der zwischen den Verschiebeeinrichtungen 13c und 13d liegt, entgegen oder mit dem Uhrzeigersinn, je nach Drehrichtung, weiterwandert.

Im Fall der in Fig. 1 gezeigten Ausführungsform erfolgt die Drehung im Uhrzeigersinn.

Umgekehrt wäre es auch möglich, die Verschiebeeinrichtungen 13a, 13b ortsfest anzuordnen und stattdessen die einzelnen Ablageeinrichtungen 11a, 11b, 11c und 11d in der oben beschriebenen Weise zu drehen.

Sobald das Brötchen 12 über die Öffnung 21a gelangt, tritt es durch diese hindurch und fällt entlang des Pfeils P1 auf die zweite Ablageeinrichtung 11b. Auf dieser zweiten Ablageeinrichtung 11b wird es wiederum durch die Verschiebeelemente 14a-14f im Uhrzeigersinn auf der Ablageeinrichtung 11b verschoben, bis es über die Öffnung 21 b gelangt und durch diese hindurch entlang des Pfeils P2 auf die Ablageeinrichtung 11c gelangt. Man erkennt, dass die einzelnen Öffnungen 21a, 21b, 21c und 21d jeweils rasterförmig versetzt sind. Auch diese Durchtrittsöffnungen sind, wie eingangs erwähnt, wenigstens so groß, dass das Backgut beziehungsweise der Teigling von Ablageeinrichtung zu Ablageeinrichtung nach unten fällt, ohne sich dabei zu verformen. Nach Passieren der Durchtrittsöffnung 21 b wird der Teigling auf der Ablageeinrichtung 11 c wieder soweit im Uhrzeigersinn verschoben, bis er über die Öffnung 21c gelangt und durch diese hindurch entlang des Pfeils P3 auf die Ablageeinrichtung 21d. Schließlich fällt der Teigling durch die Öffnung 21a und durch eine Ausbringöffnung 7. Diese Ausbringöffnung 7, die bei dieser Ausführungsform am Boden des Backofens angeordnet ist, weist ebenfalls einen Schließmechanismus 28 auf, der unter dem Gewicht des Brötchens geöffnet wird, wodurch das Brötchen aus dem Backofen herausfällt.

Auf diese Weise gelangen die Brötchen abschnittsweise über die einzelnen Ablageeinrichtungen von oben nach unten.

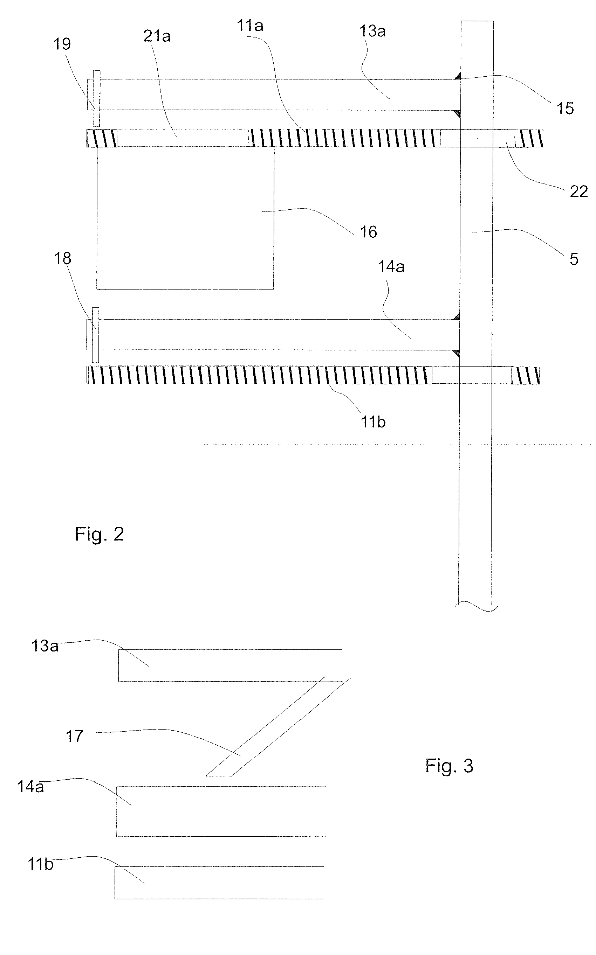

Wie eingangs erwähnt, weisen die Ablageeinrichtungen in der Mitte eine (in Fig. 2 gezeigte) zentrale Öffnung 22 zum Durchschieben der Welle 5 auf. Alternativ könnten die Platten auch anstelle der Durchtrittsöffnungen 21a, 21b, 21c und 21d Öffnungsschlitze aufweisen, die vom Mittelpunkt der einzelnen Ablageeinrichtungen zum äußeren Rand reichen. Diese Öffnungsschlitze würden bevorzugt in einer solchen Breite gewählt, dass das Backgut jeweils durch diese Schlitze hindurch treten könnte. Auch würden die einzelnen Schlitze, wie die in Fig. 1 gezeigten Öffnungen, in Umfangsrichtung zueinander versetzt werden.

Das Vorsehen von Schlitzen hätte den Vorteil, dass die einzelnen Ablageeinrichtungen einerseits dem Backofen entnommen werden könnten, was eine Reinigung erleichtert. Daneben könnte der Ofen auch beispielsweise bei Ausfall des Motors 9 oder auch alternativ als herkömmlicher Backofen eingesetzt werden, wobei auf die einzelnen Ablageeinrichtungen jeweils eine Vielzahl von Brötchen gelegt werden könnten und anschließend die Ablageeinrichtungen in den Backofen eingeschoben werden könnten, wobei jeweils das Einschieben so erfolgten würde, dass die Welle in die jeweiligen Schlitze einträte.

Bei einer weiteren Ausführungsform könnten auch zusätzlich zu den hier gezeigten Ablageeinrichtungen zusätzliche Backbleche eingeschoben werden, die jeweils einen entsprechenden Schlitz aufweisen.

Wie eingangs erwähnt, können die Ablageeinrichtungen auch eine von der kreisförmigen Gestalt abweichende Gestalt aufweisen, wie beispielsweise eine rechteckige Gestalt. In diesem Fall könnten die Ablageeinrichtungen in Führungsschienen 26 geschoben werden, die an der Seitenwand 4 und der gegenüberliegenden Seitenwand vorgesehen sind.

Bei einer weiteren bevorzugten Ausführungsform sind zwischen den einzelnen Ablageeinrichtungen (nicht gezeigte) Abstandshalter oder Stützelemente vorgesehen, die einen vorgegebenen Abstand zwischen den einzelnen Ablageeinrichtungen festlegen. Ein derartiges Abstandshalterelement ist auch zwischen der untersten Ablageeinrichtung 11d und dem Boden 2 des Backofens 1 denkbar.

Bei einer weiteren Ausführungsform werden die einzelnen Ablageeinrichtungen an einer (nicht gezeigten) äußeren Welle befestigt und eine innere drehbare Welle bewirkt eine Verschiebung der Verschiebeeinrichtungen 13a, 13b sowie den weiteren Verschiebeeinrichtungen gegenüber den Ablageeinrichtungen 11a, 11 b, 11c und 11 d.

In Fig. 1 sind lediglich die Verschiebeeinrichtungen 13a-13d an der obersten Ablageeinrichtung 11a, nicht jedoch an den übrigen Ablageeinrichtungen dargestellt.

Die Backzeit kann in dem erfindungsgemäßen Backofen durch Einstellung der Drehgeschwindigkeit der Verschiebeeinrichtungen einerseits und andrerseits durch die Anzahl der vorhandenen Ablageeinrichtungen gewählt werden. Auch die Taktzeit, mit der die Verschiebeeinrichtungen 13a, 13b, 13c bewegt werden, kann geändert werden, was sich auf die Backzeit auswirkt.

Die Verschiebeeinrichtungen 13a - 13f etc. sind bevorzugt aus Edelstahl, Blech, Lackblech oder gebogenem Rundmaterial hergestellt. Bevorzugt weisen sie einen Durchmesser zwischen 1 mm und 8 mm, bevorzugt zwischen 2 mm und 6 mm und besonders bevorzugt im Bereich von 3 mm auf. Durch diese Abmessungen wird eine maximale Durchlässigkeit bezüglich der im Backraum vorhandenen heißen Ofenluft gewährleistet.

Die Ablageeinrichtungen sind bevorzugt aus Edelstahl, Blech oder dünnem Material gebildet.

Fig. 2 zeigt eine Detaildarstellung zweier Ablageeinrichtungen 21 a und 21 b und zweier diesen zugeordneten Verschiebeeinrichtungen 13a und 14a. Die Verschiebeeinrichtungen 13a, 14a sind drehfest an der Welle 5 befestigt. Die Befestigungselemente 15 dienen zur Erhöhung der Stabilität der Verbindung zwischen der Welle und den Verschiebeelementen 13a und 13b. Mit Hilfe der Verschiebeeinrichtungen werden Brötchen über die Öffnungen 21a und 21 b geschoben, wobei diese Öffnungen nicht direkt übereinander, sondern in Umfangsrichtung versetzt angeordnet sind. Sobald diese die Öffnung erreicht haben, gelangen sie über eine Rutsche 16 auf die darunter liegende Ablageeinrichtung 11b. An den Verschiebeeinrichtungen 13a und 14a sind Begrenzungselemente 18 und 19 vorgesehen, die bewirken, dass die einzelnen (nicht gezeigten) Teiglinge wie in einer Kammer transportiert werden und nicht in Fig. 2 in Radialrichtung nach links über die Begrenzung 18, 19 hinauswandern können. Diese Begrenzungen können auch als Begrenzungsringe ausgestattet sein, die dann gleichzeitig zur Stabilisierung der einzelnen Verschiebeeinrichtungen 13a und 14a dienen. Neben den gezeigten Begrenzungen 18, 19 können auch weitere, weiter innen liegende Begrenzungselemente vorgesehen sein, die verhindern, dass die Teiglinge in Radialrichtung nach innen, das heißt auf die Welle 5 zu, wandern.

Bei einer weiteren bevorzugten Ausführungsform könnten auch mehrere Teiglinge in Radialrichtung auf den Ablageeinrichtungen 11a beziehungsweise 11b angeordnet werden und auf diese Weise der Gesamtausstoß erhöht werden. Bevorzugt werden in diesem Fall auch mehrere Öffnungen beziehungsweise eine entsprechend vergrößerte Einbringungs- und Ausbringungsöffnung vorgesehen.

Die Rutsche 16 dient dazu, dass die Brötchen nicht direkt im freien Fall auf die nächste Ablageeinrichtung fallen, sondern hierbei gebremst werden, damit die Teiglinge während des Durchgangs nicht beschädigt werden.

Fig. 3 zeigt eine weitere Ausführungsform, wobei hier die Rutsche 17 nicht wie in Fig. 2 angeordnet ist, sondern in radialer Richtung schräg von rechts oben nach links unten verläuft.

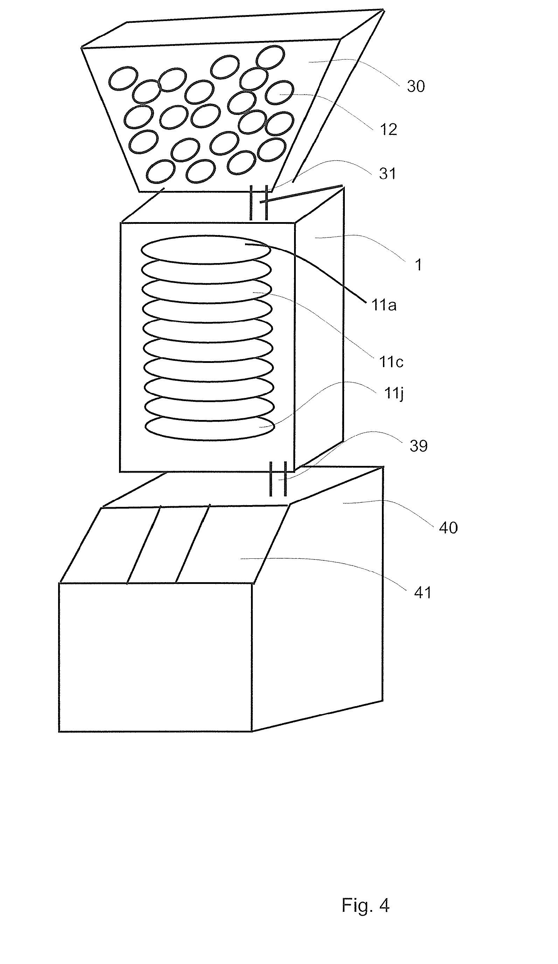

Fig. 4 zeigt eine erfindungsgemäße Backvorrichtung mit einem Backofen 1 der oben beschriebenen Art. Oberhalb des Backofens 1 ist eine Einführeinrichtung 30 vorgesehen. Diese weist eine trichterförmige Gestalt auf, sodass die Teiglinge zu einem ersten Durchgangskanal 31 geleitet werden. Durch diesen Durchgangskanal 31 hindurch gelangen die Brötchen über die (nicht gezeigte) Einbringöffnung 6 in den Backofen 1 und wandern in der oben beschriebenen Art über die einzelnen Ablageeinrichtungen 11a - 11j nach unten. Unterhalb der untersten Ablageeinrichtung 11j gelangen die Teiglinge beziehungsweise die fertig gebackenen Brötchen über die (nicht gezeigte) Ausbringöffnung und einen weiteren Durchgangskanal in ein Sammelbehältnis 40. Die Entnahmefläche 41 ist bevorzugt in Richtung des jeweiligen Geschäfts gerichtet und kann vom Bedienpersonal bequem geöffnet werden, um die permanent in das Sammelbehältnis 40 fallenden Brötchen entnehmen zu können.

Bei einer weiteren Ausführungsform könnten auch mehrere Backöfen 1 beziehungsweise Einführeinrichtungen 30 parallel oder nebeneinander angeordnet werden. Auf diese Weise könnten unterschiedliche Sorten von Backgut, die beispielsweise unterschiedliche Backzeiten benötigen, parallel zueinander gebacken werden. Bei einer weiteren bevorzugten Ausführungsform weist auch die Einführeinrichtung 30 entsprechende Schließmechanismen auf, sodass auch das Durchtreten des Backguts in den ersten Durchgangskanal 31 kontrolliert werden kann. Bei einer weiteren bevorzugten Ausführungsform wird durch eine (nicht gezeigte) Steuereinrichtung das Eintreten der Brötchen in den Backofen 1, das Durchreichen über die einzelnen Ablageeinrichtungen und der Austritt der fertig gebackenen Brötchen synchronisiert.

### Bezugszeichenliste

- 1: Backofen
- 2: untere Begrenzungswand
- 3: obere Begrenzungswand
- 4: rechte Begrenzungswand
- 5: Welle
- 6: Einbringöffnung
- 7: Ausbringöffnung
- 8: Schließmechanismus
- 9: Antriebseinrichtung
- 10: Backraum
- 11a-d, 11j: Ablageeinrichtung
- 12: Backgut
- 13a-c: Verschiebeeinrichtung
- 14a: Verschiebeeinrichtung
- 14d: Verschiebeeinrichtung
- 15: Befestigungselemente
- 16: Rutsche
- 17: Rutsche
- 18: Begrenzungselement
- 19: Begrenzungselement
- 21 a-d: Durchtrittsöffnung
- 22: zentrale Öffnung
- 23b: Sektor
- 24b: Sektor
- 25: Erfassungseinrichtung
- 27: Führungsschiene
- 28: Schließmechanismus
- 30: Einführeinrichtung
- 31: erster Durchgangskanal
- 39: weiterer Durchgangskanal

- 40: Sammelbehältnis
- 41: Entnahmefläche
- D: Drehachse

## Patentansprüche

1. Backofen mit einem durch eine Vielzahl von Begrenzungswänden (2, 3, 4) im Wesentlichen geschlossenen Backraum (10), in dem das Backgut (12) gebacken wird, wobei in wenigstens einer Begrenzungswand (2, 3, 4) eine Einbringöffnung (6) zum stückweisen Einbringen des Backguts (12) angeordnet ist, mit wenigstens einer in dem Backraum angeordneten Ablageeinrichtung (11a, 11b, 11c, 11d), auf der das Backgut (12) wenigstens zeitweise abgelegt wird, wobei wenigstens eine Verschiebeeinrichtung (13a, 13b, 14a) vorgesehen ist, die sich bezüglich der Ablageeinrichtung (11a, 11b, 11c, 11d) bewegt und die das Backgut (12) gegenüber der Ablageeinrichtung (11a, 11 b, 11 c, 11 d) verschiebt.

2. Backofen nach Anspruch 1,
**dadurch gekennzeichnet, dass**
an der Einbringöffnung eine Erfassungseinrichtung (25) vorgesehen ist, die das stückweise Einbringen des Backguts (12) erfasst.

3. Backofen nach wenigstens einem der vorangegangenen Ansprüche,
**dadurch gekennzeichnet, dass**
wenigstens eine Ablageeinrichtung (11a, 11b, 11c, 11d) eine Durchtrittsöffnung (21a, 21b, 21c, 21d) aufweist, durch die das Backgut (12) stückweise hindurchtreten kann.

4. Backofen nach wenigstens einem der vorangegangenen Ansprüche,
**dadurch gekennzeichnet, dass**
eine Vielzahl von Ablageeinrichtungen (11a, 11b, 11c, 11d) im wesentlichen parallel zueinander vorgesehen ist.

5. Backofen nach wenigstens einem der vorangegangenen Ansprüche,
**dadurch gekennzeichnet, dass**
die Verschiebeeinrichtungen (13a, 13b) sich um eine gemeinsame Drehachse (D) drehen.

6. Backofen nach wenigstens einem der vorangegangenen Ansprüche,
**dadurch gekennzeichnet, dass**
wenigstens eine weitere Verschiebeeinrichtung vorgesehen ist, die das Backgut in im Wesentlichen radialer Richtung bezüglich der gemeinsamen Drehachse der ersten Verschiebeeinrichtungen (11a, 11b, 11c, 11d) bewegt.

7. Backvorrichtung mit wenigstens einem Backofen nach wenigstens einem der vorangegangenen Ansprüche.

8. Backvorrichtung nach Anspruch 7,
**dadurch gekennzeichnet, dass**
oberhalb der oberen Begrenzungswand (3) des Backofens (1) eine Einführeinrichtung (30) mit einem sich bevorzugt in Richtung der oberen Begrenzungswand verjüngenden Querschnitt zum Einführen des Backguts vorgesehen ist.

9. Verfahren zum Backen von Backgut mit den Schritten:
- stückweises Einbringen des Backguts (12) in einen Backraum (10) mittels einer Einbringöffnung (6)
- Ablegen des Backguts (12) auf einer ersten Ablageeinrichtung (11a)
- Verschieben des Backguts (12) bezüglich der ersten Ablageeinrichtung (11a)
- Durchführen des Backguts (12) durch eine in der ersten Ablageeinrichtung (11a) vorgesehene Durchtrittsöffnung (21 a)
- Ausgabe des Backguts (12) durch eine Ausbringöffnung (7).

10. Verfahren nach Anspruch 9,
**dadurch gekennzeichnet, dass**
das Backgut (12) nach dem Durchführen durch die in der ersten Ablageeinrichtung (11a) vorgesehene Öffnung auf wenigstens eine weitere Ablageeinrichtung (11b) gelangt.
